# EUROPÄISCHE PATENTSCHRIFT

(11) **EP 1 376 991 B1**
(45) Veröffentlichungstag und Bekanntmachung des Hinweises auf die Patenterteilung: **27.08.2008**
(21) Anmeldenummer: 03011078.7
(22) Anmeldetag: 20.05.2003
(51) Int. Cl.: H04L 29/06, H04L 12/56, H04Q 7/32, H04L 12/28, G01S 5/02

(54) **Vorrichtung zur Datenübertragung zwischen einem Fahrzeug und einem mobilen Endgerät**
Apparatus for transmitting data between a vehicle and a mobile terminal
Appareil transmettant des données entre un véhicule automobile et un terminal mobile

(30) Priorität: 19.06.2002 DE 10227287
(43) Veröffentlichungstag der Anmeldung: 02.01.2004
(73) Patentinhaber: ROBERT BOSCH GMBH, 70442 Stuttgart (DE)
(72) Erfinder: Vogel, Peter, 61194 Niddatal (DE); Mann Pelz, Rodolfo, 30175 Hannover (DE); Wildschuette, Florian, 31139 Hildesheim (DE)

(56) Entgegenhaltungen:
- EP-A- 1 197 396
- EP-A- 1 209 928
- WO-A-02/23933
- NUSSER R ET AL: "Bluetooth-based wireless connectivity in an automotive environment" IEEE VTC 2000, Bd. 4, 24. September 2000 (2000-09-24), Seiten 1935-1942, XP010524360

## Beschreibung

Die Erfindung betrifft ein Verfahren zur Übertragung von Daten zwischen einem Fahrzeug und einem mobilen Endgerät und eine Vorrichtung zum Empfang und zur Speicherung und/oder zum Auslesen von Daten in einem Kraftfahrzeug.

Aus dem Stand der Technik ist es bekannt, ein Fahrzeug mit einem GPS (Global Positioning System), einem Navigationssystem oder einem Fahrerinformationssystem auszurüsten. Navigationssysteme arbeiten dergestalt, dass die momentane Position des Fahrzeuges, die über ein GPS ermittelt wird, im Verhältnis zu einem eingegebenen Fahrziel gesetzt wird und dass auf der Grundlage gespeicherten oder abgefragten Datenmaterials eine entsprechende Fahrroute errechnet und ausgegeben wird. Die Fahrroute wird vorzugsweise akustisch über im Fahrzeug installierte Lautsprecher und auf einem Display ausgegeben.

Weiterhin sind mobile Endgeräte wie Telefon, PDA (Personal Digital Assistent) oder tragbare Rechner mit einer Funkschnittstelle bekannt, die Daten empfangen und ausgeben können.

Es sind auch Vorrichtungen und Verfahren bekannt, bei denen Daten zwischen einem Fahrzeug und einem mobilen Endgerät über eine Funkschnittstelle ausgetauscht werden.

So wird in dem Aufsatz "Bluetooth-based Wireless Connectivity in an Automotive Environment" von René Nüsser und Rodolfo Mann Pelz in IEEE VTC 2000, Band 4, 2000-09-24, ein Fahrzeug-Kommunikationssystem vorgestellt, bei dem Daten zwischen einem Fahrzeug und einem mobilen Gerät über eine Bluetooth-Funkverbindung übertragen werden können.

Die EP-A-1 209 928 offenbart ein Verfahren zum Ausführen kommerzieller Aktivitäten, bei dem ein mobiles Gerät über eine Funkschnittstelle auf einen Server zugreifen kann, der in einem Fahrzeug eingebaut ist.

Die EP-A-1 197 396 offenbart ein Gerät zum Umwandeln verschiedener Protokolle, um mit einem mobilen Gerät über eine Bluetooth-Schnittstelle auf die Fahrzeugelektrortik zugreifen zu können, die ein CAN-Bussystem (CAN, Controller Area Network) verwendet.

Schließlich offenbart die WO-A-02/23933 eine Kommunikationseinrichtung eines Kraftfahrzeugs, bei der über eine Kurzstreckenfunkeinrichtung Daten zwischen der Kommunikationseinrichtung des Kraftfahrzeugs und einem Mobilfunkgerät ausgetauscht werden können.

Ausgehend von diesem Stand der Technik liegt der Erfindung die Aufgabe zugrunde, den Zugang zu in einem Fahrzeug gespeicherten oder zur Verfügung stehenden Informationen für den Nutzer mobiler Endgeräte zu optimieren und möglichst einfach und preiswert zu gestalten.

Diese Aufgabe wird durch ein Verfahren mit den Merkmalen des Anspruchs 1 und eine Vorrichtung mit den Merkmalen des Anspruchs 3 gelöst. Vorteilhafte Ausgestaltungen und Weiterbildungen der Erfindung sind in den Unteransprüchen beschrieben.

Durch das Vorsehen einer Funkschnittstelle zum Ausgeben der Daten an mobile Endgeräte und/oder zum Empfangen von Daten von mobilen Endgeräten ist es möglich, den Austausch von im Fahrzeug gespeicherten oder zur Verfügung stehenden Informationen und Daten mit mobilen Endgeräten zu ermöglichen bzw. zu erleichtern. Die mobilen Endgeräte können somit auf Informationen zurückgreifen, die in einem Fahrzeug gespeichert verfügbar sind, wobei das Fahrzeug als ein Datenserver dient, der dem Endgerät, auch in größerer Entfernung, Daten zur Verfügung stellt. Eine Integration der Vorrichtung bzw. des Servers in Telematik-Endgeräte ist möglich und eröffnet eine Vielzahl an Anwendungsmöglichkeiten.

Das Verfahren ermöglicht es, dass der Fahrer des Fahrzeugs über das mobile Endgerät auf das Navigationssystem des Fahrzeugs zurückgreifen und dieses für eine Offboard-Navigation nutzen kann. So kann sich der Fahrer mit Hilfe des im Kraftfahrzeug befindlichen Navigationssystems und seines mobilen Endgerätes zum Ziel führen lassen, ohne sich im Fahrzeug zu befinden.

Vorteilhafterweise sind die empfangenen und gespeicherten bzw. auszulesenden Daten die eines Fahrerinformationssystems und/oder eines Navigationssystems und/oder eines anderen Datenspeichers, so dass die Nutzer mobiler Endgeräte einmal auf die Rechenleistung des Fahrzeugrechners und die Navigationssoftware bzw. der Ortungseinrichtungen zurückgreifen können, andererseits jederzeit über Informationen bezüglich des Fahrzeuges verfügen können.

Vorteilhafterweise ist die Funkschnittstelle als GSM-, UMTS- oder GPRS-Datenkanal ausgebildet, wobei der spezielle Charakter von UMTS und GPRS erlaubt, einen ständigen Online-Zugang bereitzustellen, bei dem nur die übertragene Datenmenge, nicht aber die Verbindungszeit bezahlt wird. Dadurch wieder der Zugriff, beispielsweise auf das Internet, jederzeit mobil möglich sein.

Um auf beispielsweise in einem CD-Wechsler abgelegte Daten zurückgreifen zu können oder den vorhandenen Speicherplatz in seinem Fahrzeugrechner ausnutzen zu können, ist eine Datenbank oder eine Ausleseeinrichtung für Datenträger für die Vorrichtung vorgesehen, um jederzeit auf die relevanten und gespeicherten Daten zurückgreifen zu können.

Alternativ oder ergänzend ist vorgesehen, dass eine Datenübertragung zu den mobilen Endgeräten über ein Datenübertragungssystem mit kurzer Reichweite, insbesondere Bluetooth oder WLAN, erfolgt, wodurch eine Aktualisierung der Serverdaten vorgenommen werden kann, ohne Verbindungsgebühren zu bezahlen. Der Server bzw. die Vorrichtung organisiert die Daten und stellt sie dem mobilen Endgerät bei Bedarf zur Verfügung.

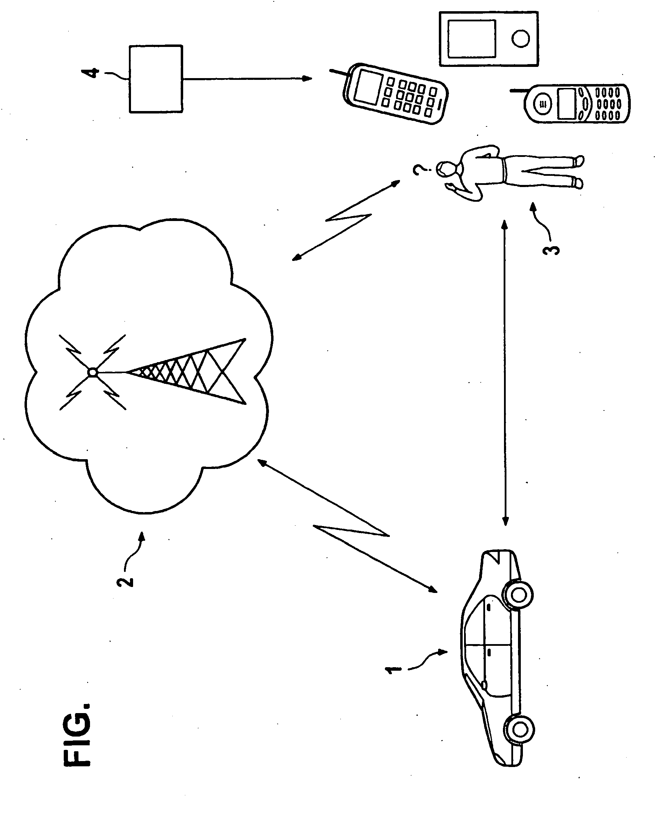

Anhand der beigefügten Figur wird die Erfindung im Rahmen eines Ausführungsbeispiels erläutert. Die Figur zeigt schematisch die Konstellation Fahrzeug, Nutzer mobiler Endgeräte sowie Sendeeinrichtung.

In der Figur ist ein Fahrzeug 1 gezeigt, das mit einem Fahrerinformationssystem und/oder einem Navigationssystem oder einem Datenträger wie CD, DVD etc. ausgestattet ist. Daten für das Fahrerinformationssystem bzw. Navigationssystem werden von einer Sendeeinrichtung 2 an das Fahrzeug 1 übermittelt. In diesem Fahrzeug 1 werden die Daten empfangen, gespeichert bzw. zwischengespeichert und bei Bedarf ausgelesen und Einrichtungen innerhalb des Fahrzeuges zur Verfügung gestellt. Ebenfalls in dem Fahrzeug 1 ist eine Funkschnittstelle vorhanden, mit der es ermöglicht wird, dass mobile Endgeräte 3 mit der Vorrichtung zum Empfang und zur Speicherung bzw. zum Auslesen von Daten in dem Kraftfahrzeug 1 kommunizieren. Neben der Ausbildung des mobilen Datenkanals als GSM, UMTS oder GPRS können zur Kommunikation zwischen Fahrzeug 1 und Endgeräten 3 auch kurzreichweitige Funksysteme, wie WLAN, Bluetooth oder dergleichen verwendet werden.

Die im Fahrerinformationssystem zur Verfügung stehenden Daten wie Reiseführer-CD, Navigations-CD, persönliche Daten wie Adressbuch, Mails, gespeicherte Texte oder dergleichen, können von einem zugelassenen Benutzer außerhalb des Fahrzeuges 1 über die entsprechende Funkschnittstelle genutzt werden. Weiterhin ist es möglich, dass der Benutzer der mobilen Endgeräte 3 Daten in das Fahrzeug 1 überträgt, die ihrerseits gespeichert oder weiter gesendet werden. Es kann also eine Kommunikation in beiden Richtungen zwischen Fahrzeug 1 und mobilem Endgerät 3 stattfinden. Ist eine Positionsbestimmung der Endgeräte 3 notwendig, so kann dies beispielsweise über ein in dem mobilen Endgerät 3 integriertes GPS-Modul, über E-OTD oder die Basislokalisierungsmethode erfolgen. Ein mobiles Endgerät 3 kann somit nicht nur die von der Sendeeinrichtung 2 ausgesendete Funkdaten, sondern beispielsweise auch von Satelliten 4 übermittelte Positionsdaten empfangen.

Der Einsatz einer im Fahrzeug 1 zur Verfügung stehenden Vorrichtung, ein sogenannter Server, hat bei der Orientierung in einer fremden Stadt Vorteile. Ein Autofahrer lässt sich beispielsweise von dem in dem Fahrzeug 1 installierten Navigationssystem in die Innenstadt führen. Sofern das Fahrzeug 1 nicht in der Innenstadt abgestellt werden kann, muss der Fahrer den Rest der Strecke bis zu seinem Ziel als Fußgänger ohne Navigationssystem zurücklegen. Über ein mobiles Endgerät 3 mit Zugang zu einem mobilen Datenkanal, wie z. B. ein Handy oder ein PDA, kann der Fahrer mit dem Fahrzeug 1 kommunizieren und die entsprechenden Informationen abfragen. Ist das mobile Endgerät 3 zusätzlich mit einer Positionsbestimmungseinrichtung ausgestattet, kann der Fahrer auf die Vorrichtung bzw. den Server in seinem Fahrzeug 1 zurückgreifen und die im Fahrzeug 1 vorhandene Navigation als Navigationsserver für eine Offboard-Navigation nutzen. So kann sich der Fahrer mit Hilfe des im Kraftfahrzeug 1 befindlichen Navigationssystems und seines mobilen Endgerätes 3 zum Ziel führen lassen, ohne sich im Fahrzeug 1 zu befinden. Hat das Endgerät 3 keine automatische Positionsbestimmung ist es möglich, die eigene Position anhand von Straßennamen und Hausnummern per Hand einzugeben, wobei der Rechner im Fahrzeug die entsprechenden Navigationsdaten und die einzuschlagende Route errechnet und an das mobile Endgerät 3 übermittelt.

Alle Informationen, die im Fahrzeug 1 gespeichert sind, können von dem mobilen Endgerät 3 genutzt werden. Voraussetzung hierfür ist die Zugangsberechtigung für das jeweilige System und die Zugriffsberechtigung für die betreffenden Daten. Diese Daten können beispielsweise sämtliche Zusatzinformationen einer Navigations-CD oder DVD oder Informationen eines beliebigen Datenträgers sowie fahrzeugrelevante Informationen sein. Neue Informationen, die mit dem mobilen Endgerät 3 gewonnen werden, so z. B. Fotos oder diktierte Texte, können auf das Fahrzeug 1 übertragen werden und auf diese Weise auch anderen mobilen Endgeräten 3, die mit dem Fahrzeugserver kommunizieren, zur Verfügung gestellt werden.

Wenn mehrere Personen das Fahrzeug 1 nutzen, können sie von beliebigen Orten von dem Fahrzeug 1 den aktuellen Status abfragen. Dies können Informationen über den aktuellen Standort des Fahrzeugs 1 oder aber auch spezifische Daten, wie Tankfüllung oder dergleichen sein. Falls eine Person von dem Fahrzeugserver mitgeteilt bekommt, wer der aktuelle Nutzer des Fahrzeuges 1 ist, können über den Kfz-Server spezifische Informationen ausgetauscht werden. Dies können z. B. persönliche Nachrichten sein.

Eine weitere Anwendungsmöglichkeit besteht darin, dass durch die Vorrichtung das Auffinden des Fahrzeuges 1 erleichtert wird. Sofern mehrere Personen ein Fahrzeug 1 nutzen wollen, kann die Situation entstehen, dass ein Fahrzeug 1 an einem Ort geparkt ist, dessen Standort nicht allen beteiligten Personen bekannt ist. Sofern die anderen Nutzer, beispielsweise bei einer Trennung einer Gruppe während eines Einkaufes, zu dem Fahrzeug 1 zurück möchten, muss lediglich eine Verbindung zu dem Fahrzeug 1 hergestellt werden, wobei der Fahrzeugrechner die aktuelle Position des Fahrzeuges 1 dem anfragenden Nutzer übermittelt.

Eine Weiterbildung sieht vor, dass eine Person, die zu dem Fahrzeug 1 zurück möchte, den aktuellen Standort bzw. den Straßennamen und die Hausnummer in das mobile Endgerät 3 eingibt oder mit einer Lokalisierungsmethode bestimmt und diese Information bzw. diese Daten der Vorrichtung bzw. dem Fahrzeugserver übermittelt. Das Navigationssystem berechnet nunmehr die Route für den Rückweg zum Fahrzeug 1 und teilt diese dem mobilen Endgerät 3 mit. Anschließend wird die Person zum Fahrzeug 1 zurückgeführt (Offboard-Navigation).

Die Vorrichtung kann aber auch über das reine Verschicken von Navigationsinformationen hinaus als ein Datenserver eingesetzt werden. Das heißt, dass auf Anfrage oder zu bestimmten Ereignissen Daten an ein mobiles Endgerät 3 verschickt werden. Die Vorrichtung arbeitet dann als ein "normaler" Server, der Daten senden und empfangen kann.

Ein besonderes Ereignis, das ein Verschicken von Daten auslösen kann, wäre die Übermittlung einer Ortsposition eines mobilen Endgerätes 3 an das Fahrzeug 1. Sobald das mobile Endgerät 3 eine bestimmte Position erreicht hat, verschickt die Vorrichtung (der Server) entsprechende Daten. Ebenfalls ist der umgekehrte Fall denkbar, bei dem das mobile Endgerät 3 bei Erreichen einer bestimmten Position, Daten an das Fahrzeug 1 übermittelt. Ebenfalls können aus dem Fahrzeug 1 Daten gesendet oder von mobilen Endgeräten 3 angefordert und empfangen werden, wenn das Fahrzeug 1 eine bestimmte Position erreicht hat.

Eine weitere Anwendung besteht darin, dass das Fahrzeug 1 auf einem Firmengelände eine Verbindung zu einem firmeneigenen Netzwerk, z. B. ein größeres WLAN, herstellt. Über diese Infrastruktur kann ein Datenaustausch vorgenommen werden, wobei die gesammelten Informationen an das Firmennetzwerk gesendet werden. Personalisierte oder firmenbezogene Daten können an das Fahrzeug 1 gesendet werden. Damit kann eine Aktualisierung der Daten bzw. Serverdaten vorgenommen werden, ohne Verbindungsgebühren zu bezahlen (WLAN). Die Vorrichtung bzw. der Server organisiert die Daten und stellt sie dem mobilen Endgerät 3 bei Bedarf zur Verfügung.

Der Kern der Erfindung besteht darin, dass dem mobilen Nutzer der Zugriff auf Fahrzeugdaten ermöglicht wird. Das Fahrzeug 1 arbeitet als Diensteprovider (Server) für zugeordnete, mobile Endgeräte 3. Endgeräte 3 und Server können gleichermaßen Daten empfangen und senden. Es wird somit ein Fahrerinformationssystem mit einem integrierten Server mit einer angeschlossenen Datenbank geschaffen, um einen Austausch der Informationen zu ermöglichen und zu erleichtern.

Aufgrund der Tatsache, dass das eigene Fahrzeug 1 der Serviceprovider ist, ist eine kostengünstige Übermittlung der gespeicherten Daten an mobile Endgeräte 3 möglich. Weiterhin ist die Bedienung des Fahrerinformationssystems, in das die Vorrichtung integriert ist, dem Nutzer vertraut, so dass keine zeitaufwendige Orientierungsphase notwendig ist. Die Vorrichtung bzw. der Fahrzeugserver hat nur wenige mobile Endgeräte zu bedienen, wodurch eine hohe Erreichbarkeit und höhere Zuverlässigkeit im Vergleich zu kommerziellen Providern gewährleistet ist.

Weiterhin können die eigenen, im Fahrerinformationssystem abgelegten persönlichen Profile problemlos auf die mobilen Endgeräte übertragen werden, so dass keine Anpassung auf ungewohnte Eingabe- oder Darstellungsroutinen erfolgt.

Weiterhin ist eine Offboard-Navigation unabhängig von einem externen Provider mit Hilfe des im Fahrzeug vorhandenen Navigationsgerätes möglich. Über preiswerte Datenkanäle, wie GSM, GPRS, WLAN und dergleichen können Daten ausgetauscht werden, ohne eine Gebühr für einen Dienst bezahlen zu müssen. Sofern das mobile Endgerät über eine Positionsbestimmungseinheit verfügt, können dynamisch Alternativrouten berechnet werden, wenn das mobile Endgerät 3 im Rahmen einer Offboard-Navigation benutzt wird. Durch eine ständige Verbindung (always on) zwischen dem mobilen Endgerät 3 und dem Fahrerinformationssystem kann die Route immer aktualisiert und angepasst werden.

## Patentansprüche

1. Verfahren zur Übertragung von Daten zwischen einem Fahrzeug und einem mobilen Endgerät (3), wobei in dem Fahrzeug (1) Daten in einem Speicherbereich verwaltet und/oder abgelegt werden und dass bei Anfrage des mobilen Endgerätes (3) die angefragten Daten ausgelesen und über eine Funkschnittstelle an das mobile Endgerät (3) gesendet werden, **dadurch gekennzeichnet, dass** eine Positionsbestimmung des Fahrzeuges (1) und eine Positionsbestimmung des mobilen Endgerätes (3) durchgeführt wird und dass aufgrund der angefragten Daten eine Route oder Zielführung für die Strecke zwischen dem Fahrzeug (1) und dem mobilen Endgerät (3) in dem mobilen Endgerät (3) oder dem Fahrzeug (1) ausgegeben wird.

2. Verfahren nach Anspruch 1, **dadurch gekennzeichnet, dass** die Daten nur an festgelegte mobile Endgeräte (3) gesendet werden.

3. Vorrichtung zum Empfang und zur Speicherung und/oder zum Auslesen von Daten in einem Kraftfahrzeug (1), die zur Durchführung des Verfahrens nach einem der voranstehenden Ansprüche geeignet ist, mit einer Funkschnittstelle zum Ausgeben der Daten an mobile Endgeräte (3) und/oder zum Empfangen von Daten von mobilen Endgeräten (3), **dadurch gekennzeichnet, dass** eine Positionsbestimmung des Fahrzeuges (1) und eine Positionsbestimmung des mobilen Endgerätes (3) durchgeführt wird und dass aufgrund der angefragten Daten eine Route oder Zielführung für die Strecke zwischen dem Fahrzeug (1) und dem Endgerät (3) in dem Endgerät (3) oder dem Fahrzeug (1) ausgegeben wird.

4. Vorrichtung nach Anspruch 3, **dadurch gekennzeichnet, dass** die auszulesenden Daten die eines Fahrzeuginformationssystems und/oder eines Navigationssystems sind.

5. Vorrichtung nach Anspruch 3 oder 4, **dadurch gekennzeichnet, dass** die Funkschnittstelle als GSM-, UMTS-, WLAN- oder GPRS-Datenkanal ausgebildet ist.

6. Vorrichtung nach einem der Ansprüche 3 bis 5, **dadurch gekennzeichnet, dass** eine Datenbank und/oder eine Ausleseeinrichtung für Datenträger vorgesehen ist.

7. Vorrichtung nach einem der Ansprüche 3 bis 6, **dadurch gekennzeichnet, dass** Bluetooth oder WLAN für die Übertragung zu und von mobilen Endgeräten (3) vorgesehen ist.

8. Fahrzeug (1) mit einer Vorrichtung nach einem der Ansprüche 3 bis 7.

## Claims

1. Method for transmitting data between a vehicle and a mobile terminal (3), wherein data are managed and/or stored in a memory area in the vehicle (1), and in that when the mobile terminal (3) is interrogated the interrogated data are read out and transmitted to the mobile terminal (3) via a radio interface, **characterized in that** the position of the vehicle (1) and the position of the mobile terminal (3) is determined, and **in that** on the basis of the interrogated data a route for the distance between the vehicle (1) and the mobile terminal (3) is output in the mobile terminal (3) or the vehicle (1).

2. Method according to Claim 1, **characterized in that** the data are transmitted only to specified mobile terminals (3).

3. Device for receiving and for storing and/or reading out data in a motor vehicle (1) which is suitable for carrying out the method according to one of the preceding claims, having a radio interface for outputting the data to mobile terminals (3) and/or for receiving data from mobile terminals (3), **characterized in that** the position of the vehicle (1) is determined and the position of the mobile terminal (3) is determined, and **in that** on the basis of the interrogated data a route for the distance between the vehicle (1) and the terminal (3) is output in the terminal (3) or the vehicle (1).

4. Device according to Claim 3, **characterized in that** the data which are to be read out are data from a vehicle information system and/or a navigation system.

5. Device according to Claim 3 or 4, **characterized in that** the radio interface is embodied as a GSM, UMTS, WLAN or GPRS data channel.

6. Device according to one of Claims 3 to 5, **characterized in that** a database and/or a readout device for data carriers are provided.

7. Device according to one of Claims 3 to 6, **characterized in that** Bluetooth or WLAN is provided for transmitting to and from mobile terminals (3).

8. Vehicle (1) having a device according to one of Claims 3 to 7.

## Revendications

1. Procédé de transmission de données entre un véhicule et un terminal mobile (3) selon lequel on gère les données dans une zone de mémoire du véhicule (1) et/ou on les enregistre dans cette zone et en ce que,
à la requête du terminal mobile (3), on extrait les données demandées et on les envoie par une interface radio vers le terminal mobile (3),
**caractérisé par**
une détermination de position du véhicule automobile (1) et une détermination de position du terminal mobile (3) et en ce qu'à partir des données demandées, on émet un trajet ou un guidage vers la destination sur le trajet entre le véhicule (1) et le terminal mobile (3), dans celui-ci ou dans le véhicule (1).

2. Procédé selon la revendication 1,
**caractérisé en ce que**
les données ne sont envoyées qu'à des terminaux mobiles (3), arrêtés en position fixe.

3. Dispositif de réception et de mémorisation et/ou de lecture de données dans un véhicule automobile (1) permettant la mise en oeuvre du procédé l'une des revendications précédentes, comprenant une interface radio pour émettre des données vers des terminaux mobiles (3) et/ou pour recevoir des données provenant de terminaux mobiles (3),
**caractérisé en ce qu'**
on effectue une détermination de position du véhicule (1) et une détermination de position du terminal mobile (3) et à partir des données demandées, on émet un trajet ou un guidage vers une cible pour le trajet compris entre le véhicule (1) et le terminal (3) en émettant vers le terminal (3) ou le véhicule (1).

4. Dispositif selon la revendication 3,
**caractérisé en ce que**
les données à lire sont celles d'un système d'informations du véhicule et/ou d'un système de navigation.

5. Dispositif selon la revendication 3 ou 4,
**caractérisé en ce que**
l'interface radio est réalisée sous la forme d'un canal de données GSM, UMTS, WLAN ou GPRS.

6. Dispositif selon l'une des revendications 3 à 5,
**caractérisé par**
une banque de données et/ou une installation de lecture pour des supports de données.

7. Dispositif selon l'une des revendications 3 à 6,
**caractérisé par**
un système Bluetooth ou WLAN pour la transmission de données échangées avec des terminaux mobiles (3).

8. Véhicule (1) comportant un dispositif selon l'une des revendications 3à7.
